# FASCICULE DE BREVET EUROPEEN

(11) **EP 3 699 712 B1**
(45) Date de publication et mention de la délivrance du brevet: **03.03.2021**
(21) Numéro de dépôt: 20157961.2
(22) Date de dépôt: 18.02.2020
(51) Int. Cl.: G08G 5/00

(54) **PROCÉDÉ ET DISPOSITIF ÉLECTRONIQUE DE DÉTERMINATION D'AU MOINS UN DOMAINE DE CONSOMMATION DE CARBURANT POUR UN AÉRONEF, PROGRAMME D'ORDINATEUR ET SYSTÈME ÉLECTRONIQUE D'AFFICHAGE ASSOCIÉS**
VERFAHREN UND ELEKTRONISCHE VORRICHTUNG ZUR BESTIMMUNG MINDESTENS EINES BRENNSTOFFVERBRAUCHSBEREICHS EINES LUFTFAHRZEUGS, ENTSPRECHENDES COMPUTERPROGRAMM UND ELEKTRONISCHES ANZEIGESYSTEM
METHOD AND ELECTRONIC DEVICE FOR DETERMINING AT LEAST ONE FUEL CONSUMPTION DOMAIN FOR AN AIRCRAFT, ASSOCIATED COMPUTER PROGRAM AND ELECTRONIC DISPLAY SYSTEM

(30) Priorité: 20.02.2019 FR 1901680
(43) Date de publication de la demande: 26.08.2020
(73) Titulaire: Thales, 92400 Courbevoie (FR)
(72) Inventeur: MENNECHET, Florent, 33701 MERIGNAC (FR); SERVANTIE, Xavier, 33701 MERIGNAC (FR); HAURET, Daniel, 33701 MERIGNAC (FR)
(74) Mandataire: Lavoix

(56) Documents cités:
- EP-A1- 3 378 784
- JP-A- S5 926 014
- US-A1- 2009 157 290
- US-A1- 2011 208 374

## Description

La présente invention concerne un procédé de détermination d'au moins un domaine de consommation de carburant pour un aéronef, le procédé étant mis en œuvre un dispositif électronique de détermination.

L'invention concerne également un programme d'ordinateur comportant des instructions logicielles qui, lorsqu'elles sont exécutées par un ordinateur, mettent en œuvre un tel procédé de détermination.

L'invention concerne aussi un dispositif électronique de détermination d'au moins un domaine de consommation de carburant pour un aéronef, et un système électronique d'affichage comprenant un tel dispositif de détermination

Le document US 2011/208374 A1 montre comment un affichage peut aider un pilote à sélectionner les paramètres de vol les plus économiques.

L'invention concerne le domaine des systèmes d'affichage de données de consommation d'un aéronef, de préférence destinés à être embarqués à bord d'un aéronef, notamment dans un cockpit d'aéronef.

La consommation de l'aéronef dépend de l'altitude. En effet, les frottements aérodynamiques se réduisent avec l'altitude et la consommation diminue alors. La consommation de l'aéronef dépend en outre d'une grandeur de propulsion de l'aéronef, telle qu'une vitesse, par exemple la vitesse air, ou une puissance moteur de l'aéronef.

La gestion de la consommation est alors difficile pour le pilote lorsque l'aéronef se trouve dans une phase de vol, où il ne suit pas une trajectoire prédéfinie, c'est-à-dire une phase de vol sans plan de vol prédéfini. Pour gérer une telle phase de vol, le pilote doit alors estimer le temps qu'il pourra voler à une altitude donnée en fonction d'une quantité de carburant prévue pour cette phase de vol. Les pilotes parlent généralement de temps de jeu (de l'anglais *playtime*), expression qui désigne ce qu'on peut faire d'une quantité de carburant allouée pour une telle phase de vol.

Toutefois, cette estimation nécessite pour le pilote d'effectuer des calculs mentaux complexes et exigeants en ressources cognitives. Ces calculs sont en outre généralement approximatifs, et amènent alors par exemple le pilote à devoir écourter subitement ladite phase de vol, lorsque l'aéronef a consommé toute la quantité de carburant allouée à cette phase de vol.

Le but de l'invention est alors de proposer un procédé et un dispositif électronique de détermination d'au moins un domaine de consommation de carburant pour un aéronef qui permettent au pilote de prévoir plus facilement la consommation de carburant de l'aéronef au cours d'au moins une phase de vol, où il ne suit pas une trajectoire prédéfinie, c'est-à-dire une phase de vol sans plan de vol prédéfini, et d'améliorer alors la sécurité du vol.

A cet effet, l'invention a pour objet un procédé de détermination d'au moins un domaine de consommation de carburant pour un aéronef, le procédé étant mis en œuvre un dispositif électronique de détermination et comprenant l'étape suivante :
- acquisition d'un domaine de vol de l'aéronef, le domaine de vol étant fonction de l'altitude et d'une grandeur de propulsion de l'aéronef, et
pour au moins une phase de vol respective, les étapes suivantes :
- calcul d'une courbe limite de consommation de carburant en fonction de l'altitude et de la grandeur de propulsion, la courbe limite de consommation correspondant à une consommation moyenne prévue pour ladite phase de vol, et
- détermination, à partir du domaine de vol et de la courbe limite de consommation, d'un domaine de consommation de carburant en fonction de l'altitude et de la grandeur de propulsion, le domaine de consommation de carburant comportant un premier sous-domaine de consommations inférieures à la consommation prévue pour ladite phase de vol et un deuxième sous-domaine de consommations supérieures à ladite consommation prévue, les premier et deuxième sous-domaines de consommation étant séparés par la courbe limite de consommation.

Ainsi, la détermination, à partir du domaine de vol et de la courbe limite de consommation, du domaine de consommation de carburant avec le premier sous-domaine de consommations inférieures à la consommation prévue et le deuxième sous-domaine de consommations supérieures à ladite consommation prévue permet au pilote d'établir bien plus facilement si la consommation instantanée de l'aéronef est inférieure ou bien supérieure à la consommation prévue pour ladite phase de vol où l'aéronef ne suit pas une trajectoire prédéfinie.

En particulier, le pilote peut facilement déterminer si le symbole représentatif de la consommation instantanée de l'aéronef se trouve dans le premier sous-domaine ce qui signifie alors que la consommation instantanée de l'aéronef est, compte tenu de l'altitude et la grandeur de propulsion instantanées de l'aéronef, en accord avec la consommation prévue, ou corollairement avec la quantité de carburant prévue, pour ladite phase de vol, ou bien si ledit symbole représentatif est au contraire dans le deuxième sous-domaine, ce qui signifie alors que le pilote doit agir sur l'altitude et/ou la grandeur de propulsion de l'aéronef afin de réduire la consommation de l'aéronef, ceci pour respecter la consommation prévue pour ladite phase de vol.

Suivant d'autres aspects avantageux de l'invention, le procédé de détermination comprend une ou plusieurs des caractéristiques suivantes, prises isolément ou suivant toutes les combinaisons techniquement possibles :
- le procédé comprend en outre une étape d'affichage, sur un écran d'affichage, du domaine de consommation de carburant déterminé pour ladite phase de vol ;
- lors de l'étape de détermination, un symbole représentatif d'une consommation instantanée de l'aéronef est en outre déterminé, pour être affiché sur le domaine de consommation de carburant ;
- lors de l'étape de détermination, au moins une courbe d'iso-consommation est en outre déterminée, pour être affichée sur le domaine de consommation de carburant, chaque courbe d'iso-consommation correspondant à une consommation moyenne pour une durée de phase de vol modifiée par rapport à celle prise en compte pour le calcul de la courbe limite de consommation,
   la variation temporelle entre la durée modifiée pour une courbe d'iso-consommation respective et la durée prise en compte pour le calcul de la courbe limite de consommation étant de préférence un multiple d'intervalle(s) de cinq minutes ;
- lors de l'étape de détermination, lorsque la grandeur de propulsion est la vitesse de l'aéronef, au moins une courbe d'iso-énergie est en outre déterminée, pour être affichée sur le domaine de consommation de carburant, chaque courbe d'iso-énergie représentant l'évolution de la vitesse en fonction de l'altitude à énergie totale constante ;
- l'étape de détermination comporte en outre la détection de la présence d'une zone interdite de vol pour une plage de valeurs d'altitude et/ou de grandeur de propulsion, pour être affichée sur le domaine de consommation de carburant ;
- lors de l'étape de calcul, la courbe limite de consommation est calculée via l'intersection d'une surface modélisée de consommation pour l'aéronef et d'une surface de consommation de référence pour ladite phase de vol,
la surface modélisée de consommation étant de préférence prédéfinie et associant une consommation estimée à chaque grandeur de propulsion et altitude du domaine de vol de l'aéronef,
la surface de consommation de référence étant de préférence fonction d'une quantité de carburant prévue pour ladite phase de vol et d'une durée prévue de ladite phase de vol,
la surface de consommation de référence étant de préférence encore un plan horizontal correspondant à une consommation constante, égale à la quantité de carburant prévue divisée par la durée prévue ;
- la grandeur de propulsion est choisie parmi le groupe consistant en : une vitesse de l'aéronef, telle que la vitesse air, et une puissance moteur de l'aéronef ; et
- la quantité de carburant prévue et/ou la durée prévue de la phase de vol sont paramétrables par le pilote.

L'invention a également pour objet un programme d'ordinateur comportant des instructions logicielles qui, lorsqu'elles sont exécutées par un ordinateur, mettent en œuvre un procédé de détermination tel que défini ci-dessus.

L'invention a également pour objet un dispositif électronique de détermination d'au moins un domaine de consommation de carburant pour un aéronef, le dispositif comprenant :
- un module d'acquisition configuré pour acquérir un domaine de vol de l'aéronef, le domaine de vol étant fonction de l'altitude et d'une grandeur de propulsion de l'aéronef,
- un module de calcul configuré, pour au moins une phase de vol respective, pour calculer une courbe limite de consommation de carburant en fonction de l'altitude et de la grandeur de propulsion, la courbe limite de consommation correspondant à une consommation moyenne prévue pour ladite phase de vol, et
- un module de détermination configuré, pour ladite au moins une phase de vol respective, pour déterminer un domaine de consommation de carburant en fonction de l'altitude et de la grandeur de propulsion, à partir du domaine de vol et de la courbe limite de consommation, le domaine de consommation de carburant comportant un premier sous-domaine de consommations inférieures à la consommation prévue pour ladite phase de vol et un deuxième sous-domaine de consommations supérieures à ladite consommation prévue, les premier et deuxième sous-domaines de consommation étant séparés par la courbe limite de consommation.

L'invention a également pour objet un système électronique d'affichage pour un aéronef, le système comprenant :
- un écran d'affichage,
- un dispositif de détermination d'au moins un domaine de consommation de carburant pour l'aéronef, le dispositif de détermination étant tel que défini ci-dessus, et
- un module d'affichage, sur l'écran d'affichage, du domaine de consommation de carburant pour au moins une phase de vol respective.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
la figure 1 est une vue schématique d'un système électronique d'affichage selon l'invention, comprenant un écran d'affichage, un dispositif de détermination d'au moins un domaine de consommation de carburant pour un aéronef, et un module d'affichage sur l'écran du domaine de consommation de carburant ;
la figure 2 est une vue schématique d'un domaine de consommation de carburant, déterminé par le dispositif de détermination de la figure 1 ;
la figure 3 est une représentation schématique d'une surface modélisée de consommation pour l'aéronef et d'une surface de consommation de référence pour une phase de vol, utilisées pour calculer une courbe limite de consommation séparant des premier et deuxième sous-domaines du domaine de consommation de la figure 2 ;
la figure 4 est une vue analogue à celle de la figure 2, illustrant un décalage de la courbe limite de consommation résultant d'une situation de sous-consommation, entrainant alors une augmentation de la surface du premier sous-domaine par rapport à celle du deuxième sous-domaine ;
la figure 5 est une représentation schématique illustrant la prise en compte d'un domaine interdit de vol pour une plage de valeurs d'altitude et/ou de grandeur de propulsion, l'affichage de ce domaine interdit de vol sur le domaine de consommation de carburant ;
la figure 6 est une vue schématique de l'affichage, par le système d'affichage de la figure 1, de deux phases de vol et de leurs domaines de consommation de carburant successifs au cours du vol de l'aéronef, le vol étant représenté par une ligne de temps ; et
la figure 7 est un organigramme d'un procédé, selon l'invention, de détermination d'au moins un domaine de consommation de carburant pour un aéronef, le procédé étant mis en œuvre le dispositif de détermination de la figure 1.

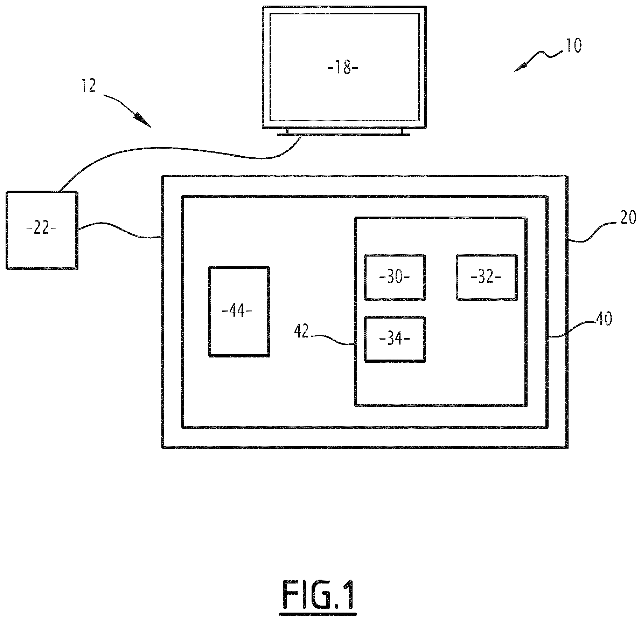

Sur la figure 1, un système électronique d'affichage 10 est configuré pour afficher des informations de vol d'un aéronef 12, notamment au moins un domaine de consommation de carburant 14.

Le système électronique d'affichage 10 comprend un écran d'affichage 18, un dispositif électronique 20 de détermination d'au moins un domaine 14 de consommation de carburant pour l'aéronef 12, et un module électronique d'affichage 22. Le module électronique d'affichage 22 est relié, d'une part, à l'écran d'affichage 18, et d'autre part, au dispositif électronique de détermination 20.

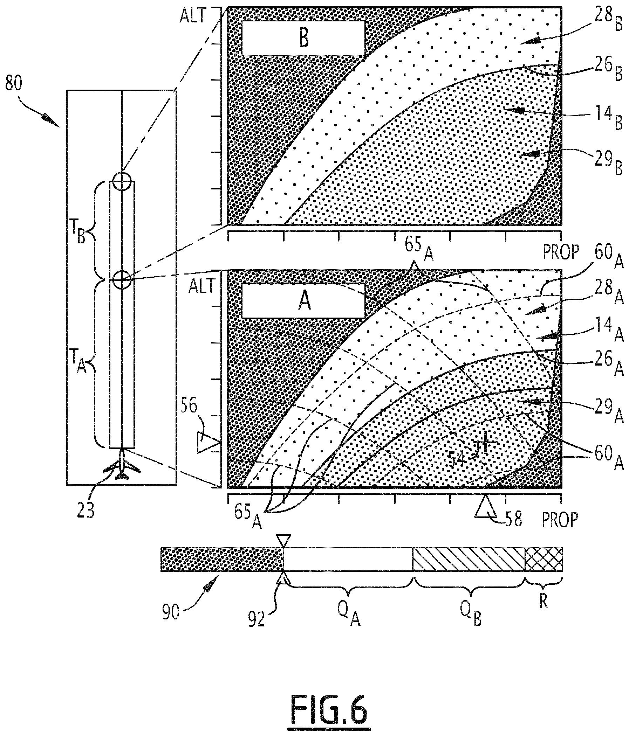

L'aéronef 12 est par exemple un avion, comme représenté sur la figure 6, où un symbole aéronef 23 représentatif de l'aéronef 12 est en forme d'un avion. En variante, l'aéronef 12 est un hélicoptère. En variante encore, l'aéronef 12 est un drone piloté à distance par un pilote.

Chaque domaine de consommation de carburant 14 est déterminé pour une phase de vol respective d'un vol de l'aéronef 12, de préférence pour une phase de vol où l'aéronef 12 ne suit pas une trajectoire prédéfinie, c'est-à-dire une phase de vol sans plan de vol prédéfini.

Chaque domaine de consommation de carburant 14 est fonction d'une altitude ALT de l'aéronef 12 et d'une grandeur de propulsion PROP, et est déterminé à partir d'un domaine de vol 24 et d'une courbe limite de consommation 26.

Chaque domaine de consommation de carburant 14 comporte un premier sous-domaine 28 de consommations C inférieures à une consommation prévue pour la phase de vol respective et un deuxième sous-domaine 29 de consommations C supérieures à la consommation prévue pour ladite phase de vol, les premier 28 et deuxième 29 sous-domaines de consommation étant séparés par la courbe limite de consommation 26.

L'altitude ALT de l'aéronef 12 est typiquement exprimée en pieds, également notés ft (de l'anglais *feet*).

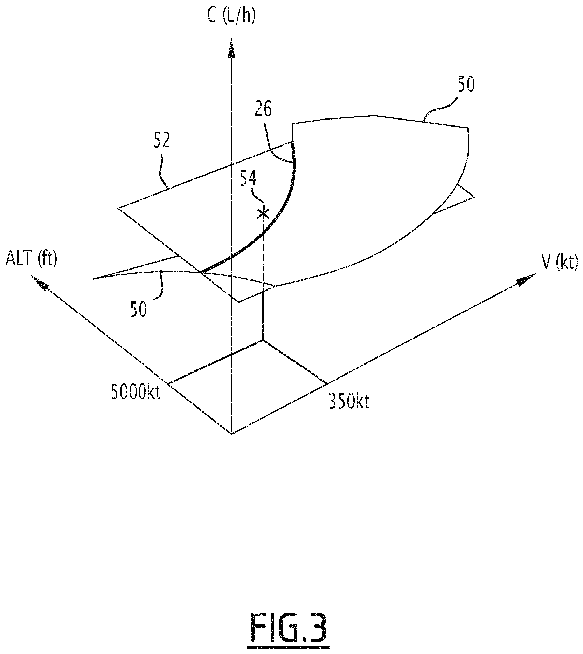

La grandeur de propulsion PROP est choisie parmi le groupe consistant en : une vitesse V de l'aéronef 12, telle que la vitesse air, et une puissance moteur de l'aéronef 12. Dans l'exemple de la figure 3, la grandeur de propulsion PROP est une vitesse V de l'aéronef 12, par exemple sa vitesse air, et est typiquement exprimée en nœuds, également notés kt (de l'anglais *knot*).

La consommation C de l'aéronef 12, qu'il s'agisse d'une consommation estimée ou encore d'une consommation instantanée, est typiquement exprimée en litres/heure, également notés L/h.

Le dispositif électronique de détermination 20 est configuré pour déterminer au moins un domaine 14 de consommation de carburant pour l'aéronef 12, et comprend un module d'acquisition 30, un module de calcul 32 et un module de détermination 34.

Dans l'exemple de la figure 1, le dispositif électronique de détermination 20 comprend une unité de traitement d'informations 40 formée par exemple d'une mémoire 42 et d'un processeur 44 associé à la mémoire 42.

Dans l'exemple de la figure 1, le module d'acquisition 30, le module de calcul 32 et le module de détermination 34 sont réalisés chacun sous forme d'un logiciel, ou d'une brique logicielle, exécutables par le processeur 44. La mémoire 42 du dispositif électronique de détermination 20 est alors apte à stocker un logiciel d'acquisition, un logiciel de calcul et un logiciel de détermination. Le processeur 44 est alors apte à exécuter chacun des logiciels parmi le logiciel d'acquisition, le logiciel de calcul et le logiciel de détermination.

En variante non représentée, le module d'acquisition 30, le module de calcul 32 et le module de détermination 34 sont réalisés chacun sous forme d'un composant logique programmable, tel qu'un FPGA (de l'anglais Field Programmable Gate Array), ou encore sous forme d'un circuit intégré dédié, tel qu'un ASIC (de l'anglais Application Specific Integrated Circuit).

Lorsque le dispositif électronique de détermination 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module électronique d'affichage 22 est configuré pour afficher, sur l'écran d'affichage 18, chaque domaine de consommation de carburant 14 déterminé par le dispositif électronique de détermination 20. Le module électronique d'affichage 22 est connu en soi.

Le module d'acquisition 30 est configuré pour acquérir le domaine de vol 24 de l'aéronef, le domaine de vol 24 étant fonction de l'altitude ALT et de la grandeur de propulsion PROP de l'aéronef 12. Le domaine de vol 24 est prédéfini pour chaque aéronef 12 respectif, généralement par le constructeur de l'aéronef 12. Le domaine de vol 24 est typiquement stocké dans une base de données, non représentée.

Le module de calcul 32 est configuré, pour au moins une phase de vol respective, pour calculer la courbe limite de consommation de carburant 26 en fonction de l'altitude ALT et de la grandeur de propulsion PROP, la courbe limite de consommation 26 correspondant à une consommation moyenne prévue pour ladite phase de vol.

Le module de calcul 32 est, par exemple, configuré pour calculer la courbe limite de consommation 26 via l'intersection d'une surface modélisée de consommation 50 pour l'aéronef 12 et d'une surface de consommation de référence 52 pour ladite phase de vol, comme représenté sur la figure 3.

Le module de détermination 34 est configuré, pour ladite au moins une phase de vol respective, pour déterminer le domaine de consommation de carburant 14 en fonction de l'altitude ALT et de la grandeur de propulsion PROP, à partir du domaine de vol 24 et de la courbe limite de consommation 26, le domaine de consommation de carburant 14 comportant, comme décrit précédemment, le premier sous-domaine 28 de consommations C inférieures à la consommation prévue pour ladite phase de vol et le deuxième sous-domaine 29 de consommations C supérieures à ladite consommation prévue, les premier 28 et deuxième 29 sous-domaines de consommation étant séparés par la courbe limite de consommation 26.

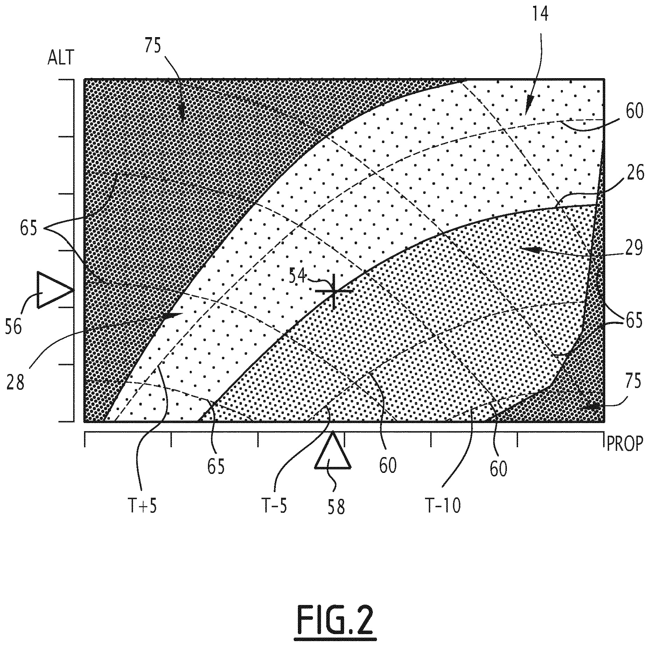

En complément facultatif, le module de détermination 34 est configuré en outre pour déterminer un symbole 54 représentatif d'une consommation C instantanée de l'aéronef 12, ce symbole représentatif 54 étant destiné à être affiché sur le domaine de consommation de carburant 14, comme représenté sur les figures 2 à 6.

En complément facultatif encore, le module de détermination 34 est configuré en outre pour déterminer un premier pointeur 56 représentant une altitude ALT instantanée de l'aéronef 12 et un deuxième pointeur 58 une grandeur de propulsion PROP instantanée de l'aéronef 12, comme représenté sur les figures 2 et 4 à 6. L'homme du métier comprendra alors que les premier 56 et deuxième 58 pointeurs sont associés au symbole représentatif 54, en ce qu'ils indiquent les valeurs d'altitude ALT instantanée et de grandeur de propulsion PROP instantanée conduisant à la consommation C instantanée représentée par le symbole représentatif 54 dans le domaine de consommation de carburant 14.

En complément facultatif encore, le module de détermination 34 est configuré en outre pour déterminer au moins une courbe d'iso-consommation 60, chaque courbe d'iso-consommation 60 étant destinée à être affichée sur le domaine de consommation de carburant 14 correspondant. Chaque courbe d'iso-consommation 60 correspond à une consommation moyenne pour une durée de phase de vol modifiée par rapport à celle prise en compte pour le calcul de la courbe limite de consommation 26.

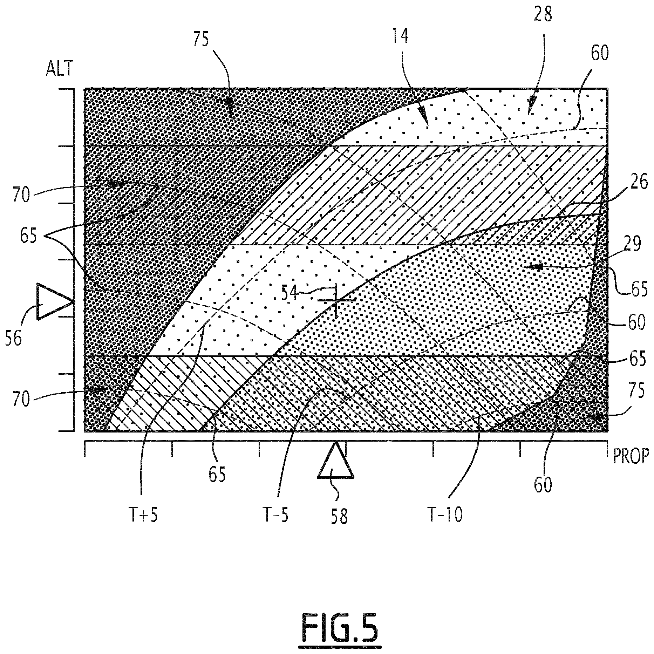

La variation temporelle entre la durée modifiée pour une courbe d'iso-consommation 60 respective et la durée prise en compte pour le calcul de la courbe limite de consommation 26 est de préférence un multiple d'intervalle(s) de cinq minutes, comme représenté sur les figures 2 et 5 où les courbes d'iso-consommation 60 sont représentées en trait pointillé. Dans les exemples des figures 2 et 5, trois courbes d'iso-consommation 60 distinctes sont affichées, à savoir une première courbe d'iso-consommation 60 associée à l'indication « T+5 » et correspondant alors à une consommation moyenne pour une durée de phase de vol augmentée de 5 minutes par rapport à celle prise en compte pour le calcul de la courbe limite de consommation 26 ; une deuxième courbe d'iso-consommation 60 associée à l'indication « T-5 » et correspondant à une consommation moyenne pour une durée de phase de vol réduite de 5 minutes par rapport à celle prise en compte pour le calcul de la courbe limite de consommation 26 ; et une troisième courbe d'iso-consommation 60 associée à l'indication « T-10 » et correspondant à une consommation moyenne pour une durée de phase de vol réduite de 10 minutes par rapport à celle prise en compte pour le calcul de la courbe limite de consommation 26.

En complément facultatif encore, lorsque la grandeur de propulsion PROP est la vitesse V de l'aéronef 12, le module de détermination 34 est configuré en outre pour déterminer au moins une courbe d'iso-énergie 65, chaque courbe d'iso-énergie 65 étant destinée à être affichée sur le domaine de consommation de carburant 14 correspondant et représentant l'évolution de la vitesse V en fonction de l'altitude ALT à énergie totale constante.

Par énergie totale constante, on entend que l'énergie totale, c'est-à-dire la somme de l'énergie cinétique (liée à la vitesse V) et de l'énergie potentielle (liée à l'altitude ALT), ne varie pas, tout en autorisant des variations de l'énergie cinétique et de l'énergie potentielle.

Autrement dit, pour avoir une telle énergie totale constante, une augmentation de l'énergie cinétique résultant d'une augmentation de la vitesse V sera compensée par une diminution de l'énergie potentielle, impliquant une diminution de l'altitude ALT. Ceci explique l'allure générale des courbes d'iso-énergie 65 représentées en trait pointillé sur les exemples des figures 2, 5 et 6, où le long de chaque courbe d'iso-énergie 65, l'altitude ALT diminue lorsque la grandeur de propulsion PROP augmente, en considérant que la grandeur de propulsion PROP est la vitesse V dans ce cas.

Inversement, pour avoir une telle énergie totale constante, une diminution de l'énergie cinétique résultant d'une diminution de la vitesse V sera compensée par une augmentation de l'énergie potentielle, impliquant une augmentation de l'altitude ALT.

Ces courbes d'iso-énergie 65 permettent alors de déterminer jusqu'à quelle altitude on peut monter sans augmenter l'énergie totale de l'aéronef.

En complément facultatif encore, le module de détermination 34 est configuré en outre pour mettre à jour dynamiquement le domaine de consommation de carburant 14, en particulier les premier 28 et deuxième 29 sous-domaines de consommation et la courbe limite de consommation 26, ainsi qu'en complément facultatif la position du symbole représentatif 54. Autrement dit, le module de détermination 34 est configuré en outre pour déterminer régulièrement le domaine de consommation de carburant 14 au cours de la phase de vol respective, ceci notamment en fonction des précédentes valeurs de la consommation C de l'aéronef 12 lors de cette phase de vol.

L'homme du métier comprendra alors que si le symbole 54 représentatif de la consommation instantanée se trouve dans le premier sous-domaine 28 à l'écart de la courbe limite de consommation de carburant 26, c'est-à-dire si l'aéronef 12 est en configuration de sous-consommation pour la phase de vol respective, alors cela tend à augmenter l'étendue du premier sous-domaine 28 par rapport à celle du deuxième sous-domaine 29, c'est-à-dire à rapprocher la courbe limite de consommation de carburant 26 de l'angle inférieur droit dans les exemples des figures 2 et 4 à 6. Sur les figures 2 et 4 à 6, les valeurs les plus faibles d'altitude ALT et de grandeur de propulsion PROP correspondent respectivement au bas de l'échelle d'altitude ALT et à la gauche de l'échelle de de grandeur de propulsion PROP. Inversement, si le symbole représentatif 54 se trouve dans le deuxième sous-domaine 29 à l'écart de la courbe limite de consommation de carburant 26, c'est-à-dire si l'aéronef 12 est en configuration de surconsommation pour la phase de vol respective, alors cela tend à augmenter l'étendue du deuxième sous-domaine 29 par rapport à celle du premier sous-domaine 28, c'est-à-dire à rapprocher la courbe limite de consommation de carburant 26 de l'angle supérieur gauche dans les exemples des figures 2 et 4 à 6. Enfin, si le symbole représentatif 54 se trouve sur la courbe limite de consommation de carburant 26, c'est-à-dire si la consommation C de l'aéronef 12 est conforme à la consommation prévue pour ladite phase de vol, alors les premier 28 et deuxième 29 sous-domaines et la courbe limite de consommation 26 ne varient pas.

En complément facultatif encore, le module de détermination 34 est configuré en outre pour détecter si au moins une zone interdite 70 de vol pour une plage de valeurs d'altitude ALT et/ou de grandeur de propulsion PROP est présente, chaque zone interdite 70 de vol étant destinée à être affichée en outre sur le domaine de consommation de carburant 14, comme représenté sur la figure 5.

Dans l'exemple de la figure 5, deux zones interdites 70 de vol distinctes sont représentées, chacune sous forme d'une zone hachurée. Dans cet exemple de la figure 5, une première zone interdite 70 de vol correspond à une plage de faibles valeurs d'altitude ALT et pour toute valeur de grandeur de propulsion PROP de l'aéronef 12 ; et une deuxième zone interdite 70 de vol correspond à une plage de valeurs d'altitude ALT plus élevées et également pour toute valeur de grandeur de propulsion PROP.

En complément facultatif encore, le module de détermination 34 est configuré en outre pour déterminer des zones hors-domaine de vol 75 à partir du domaine de vol 24 acquis. Dans les exemples des figures 2 et 4 à 6, les zones hors-domaine de vol 75 sont les zones sombres à l'extérieur du domaine de consommation de carburant 14.

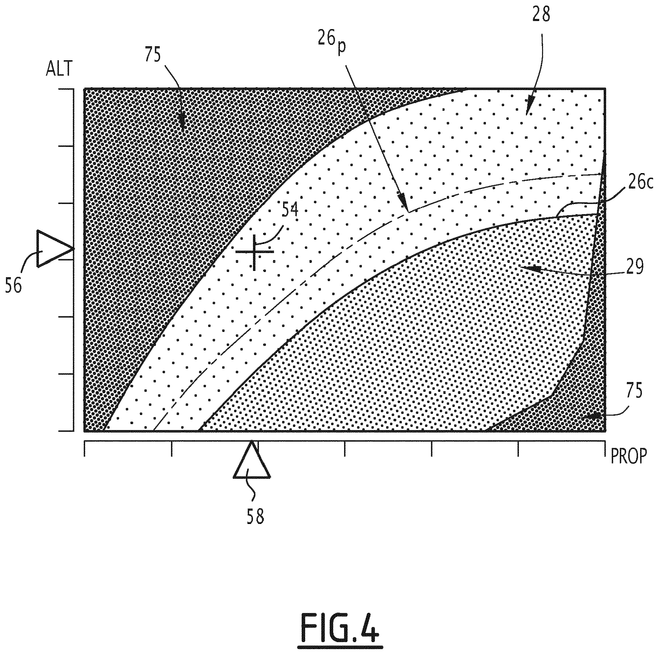

En complément facultatif encore, le module de détermination 34 est configuré en outre pour déterminer un historique de courbes limites de consommation de carburant 26 successives, une courbe limite de consommation de carburant précédente 26_{P} étant alors destinée à être affichée sur le domaine de consommation de carburant 14 en supplément de l'affichage d'une courbe limite de consommation de carburant courante 26c, comme représenté sur la figure 4. Dans l'exemple de la figure 4, la courbe limite de consommation de carburant précédente 26p est représentée en trait discontinu (ou mixte), et la courbe limite de consommation de carburant courante 26c est représentée en trait continu.

L'homme du métier observera que cet exemple de la figure 4 correspond, pour la courbe limite de consommation de carburant courante 26c, à une configuration de sous-consommation par rapport à la situation précédente associée à la courbe limite de consommation de carburant précédente 26p. En effet, le premier sous-domaine 28 correspondant à la courbe limite de consommation de carburant précédente 26p est d'étendue plus faible que celui correspondant désormais à la courbe limite de consommation de carburant courante 26_{C}, de sorte la variation de la courbe limite de consommation de carburant 26 a entraîné une augmentation de l'étendue du premier sous-domaine 28, ce qui traduit une moindre consommation.

La surface modélisée de consommation 50 est de préférence prédéfinie et associe une consommation C estimée à chaque grandeur de propulsion PROP et altitude ALT du domaine de vol 24 de l'aéronef 12.

La surface modélisée de consommation 50 est par exemple est élaborée expérimentalement en faisant des mesures de consommation pour différents couples de valeurs de grandeur de propulsion PROP et d'altitude ALT, ou encore élaborée à partir d'une équation fournie par le constructeur de l'aéronef 12.

La surface de consommation de référence 52 est de préférence fonction d'une quantité de carburant prévue pour ladite phase de vol et d'une durée prévue de ladite phase de vol.

Dans l'exemple de la figure 3, la surface de consommation de référence 52 est un plan horizontal correspondant à une consommation C constante et égale à la quantité de carburant prévue divisée par la durée prévue.

En complément facultatif, la quantité de carburant prévue et/ou la durée prévue de la phase de vol sont paramétrables par le pilote de l'aéronef 12. L'homme du métier comprendra alors qu'une variation de la quantité de carburant prévue et/ou une variation de la durée prévue modifient la courbe limite de consommation de carburant 26, et donc l'étendue, i.e. la surface, de chacun des premier 28 et deuxième 29 sous-domaines de consommation.

En particulier, une augmentation de la durée prévue ou une réduction de la quantité de carburant prévue entraîne une diminution de l'étendue du premier sous-domaine 28 et corollairement une augmentation de l'étendue du deuxième sous-domaine 29. Inversement, une réduction de la durée prévue ou une augmentation de la quantité de carburant prévue entraîne une augmentation de l'étendue du premier sous-domaine 28 et corollairement une diminution de l'étendue du deuxième sous-domaine 29.

Selon un aspect complémentaire, le dispositif électronique de détermination 20 selon l'invention est configuré pour déterminer plusieurs domaines de consommation de carburant 14 successifs au cours du vol de l'aéronef 12, chaque domaine de consommation de carburant 14 étant associé à une phase de vol respective, comme représenté sur la figure 6.

Selon cet aspect complémentaire, le dispositif électronique de détermination 20 est alors configuré, pour chaque phase de vol respective, pour calculer - via son module de calcul 32 - la courbe limite de consommation de carburant 26 respective, puis pour déterminer, via son module de détermination 34 et à partir du domaine de vol 24 et de la courbe limite de consommation 26 calculée, le domaine de consommation de carburant 14 respectif.

Dans l'exemple de la figure 6, le vol est représenté par une ligne de temps 80, avec une première phase de vol ayant une première durée prévue T_{A} et une deuxième phase de vol ayant une deuxième durée prévue T_{B}. Une jauge de carburant est également représentée sur la figure 6, avec une première quantité de carburant prévue Q_{A} pour la première phase de vol, une deuxième quantité de carburant prévue Q_{B} pour la deuxième phase de vol, et une réserve de sécurité R en carburant, cette réserve de sécurité R permettant d'assurer un atterrissage en sécurité de l'aéronef 12. Le dispositif électronique de détermination 20 est alors configuré pour calculer la première courbe limite de consommation de carburant 26_{A}, puis pour déterminer le premier domaine de consommation de carburant 14_{A} avec les sous-domaines 28_{A}, 29_{A} et éventuelles courbes d'iso-consommation 60_{A} et d'iso-énergie 65_{A} associés pour la première phase de vol, ceci par exemple en fonction notamment de la première durée prévue T_{A} et de la première quantité de carburant prévue Q_{A}. Le dispositif électronique de détermination 20 est - ensuite ou en parallèle - configuré pour calculer la deuxième courbe limite de consommation de carburant 26_{B}, puis pour déterminer le deuxième domaine de consommation de carburant 14_{B} avec les sous-domaines 28_{B}, 29_{B} et éventuelles courbes d'iso-consommation associés pour la deuxième phase de vol, ceci par exemple en fonction notamment de la deuxième durée prévue T_{B} et de la deuxième quantité de carburant prévue O_{B}. Le module d'affichage 22 est ensuite configuré pour afficher, sur l'écran d'affichage 18, les différents éléments précités pour les première et deuxième phases de vol.

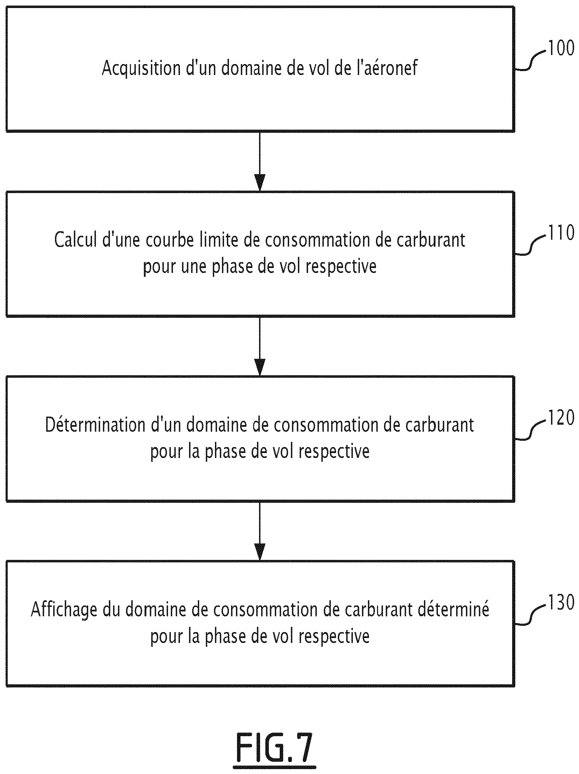

Le fonctionnement du dispositif électronique de détermination 20 va désormais être expliqué à l'aide de la figure 7 représentant un organigramme du procédé, selon l'invention, de détermination d'au moins un domaine de consommation de carburant 14 pour l'aéronef 12, le procédé étant mis en œuvre le dispositif de détermination 20.

Lors d'une étape initiale 100, le dispositif de détermination 20 acquiert, via son module d'acquisition 30, le domaine de vol 24 de l'aéronef 12.

Puis, pour au moins une phase de vol respective, et pour chaque phase de vol respective le cas échéant, le dispositif de détermination 20 calcule, via son module de calcul 32 et lors d'une étape suivante 110, la courbe limite de consommation de carburant 26 respective en fonction de l'altitude ALT et de la grandeur de propulsion PROP ; et détermine ensuite, lors de l'étape 120 et via son module de détermination 34, le domaine de consommation de carburant 14 respectif, ceci à partir du domaine de vol acquis lors de l'étape 100 et de la courbe limite de consommation 26 respective calculée lors de l'étape 110.

Enfin, le module d'affichage 22 affiche sur l'écran d'affichage 18, pour au moins une phase de vol respective, et pour chaque phase de vol respective le cas échéant, le ou chaque domaine de consommation de carburant 14 déterminé lors des étapes 100 à 120 par le dispositif de détermination 20.

Ainsi, avec le dispositif électronique de détermination 20 selon l'invention et le procédé de détermination associé, le pilote peut facilement déterminer si la consommation instantanée de l'aéronef 12 correspond au premier sous-domaine 28 ce qui signifie que la consommation instantanée de l'aéronef est, compte tenu de l'altitude ALT et la grandeur de propulsion PROP instantanées de l'aéronef 12, en accord avec la consommation prévue, ou corollairement avec la quantité de carburant prévue, pour ladite phase de vol, ou bien au contraire si la consommation instantanée de l'aéronef 12 correspond au deuxième sous-domaine 29, ce qui signifie alors que le pilote doit agir sur l'altitude ALT et/ou la grandeur de propulsion PROP de l'aéronef 12 afin de réduire la consommation de l'aéronef 12, ceci pour respecter la consommation prévue pour ladite phase de vol.

Autrement dit, le domaine de consommation de carburant 14 déterminé par le dispositif de détermination 20 selon l'invention permet de distinguer facilement les deux sous-domaines de consommation 28, 29 séparés par la courbe limite 26, l'un - à savoir le premier sous-domaine 28 - étant favorable, et l'autre - à savoir le deuxième sous-domaine 29 - étant défavorable. Le premier sous-domaine 28 qui est favorable montre l'ensemble de configurations d'altitude ALT et de grandeur de propulsion PROP dans lesquelles l'aéronef 12 peut évoluer, tout en conservant son objectif de consommation. Inversement, le deuxième sous-domaine 29 qui est défavorable montre l'ensemble de configurations d'altitude ALT et de grandeur de propulsion PROP dans lesquelles l'aéronef 12 ne respecte pas son objectif de consommation pour la phase de vol considérée, tout en étant des configurations du domaine de vol 24.

Avantageusement, le symbole 54 montre la configuration d'altitude ALT et de grandeur de propulsion PROP de l'aéronef 12 en temps réel, c'est-à-dire la configuration d'altitude ALT et de grandeur de propulsion PROP instantanées de l'aéronef 12. La courbe limite de consommation 26 évolue en outre dynamiquement en fonction de l'historique de consommation de l'aéronef 12 : si le symbole 54 reste sur la courbe limite de consommation 26, les sous-domaines 28, 29 sont inchangés ; si l'aéronef 12 est en sous-consommation pour la phase de vol considérée, alors le premier sous-domaine 28 favorable s'étend ; et si l'aéronef 12 est en surconsommation pour la phase de vol considérée, alors le deuxième sous-domaine 29 défavorable s'étend, et le pilote doit alors réagie en conséquence.

Avantageusement encore, le pilote peut paramétrer dynamiquement la durée et la quantité de carburant allouées à la phase de vol, ou mission, considérée. La quantité de carburant peut être une quantité allouée à la mission en cours, la quantité totale de carburant, ou encore la quantité totale à laquelle est soustraite la quantité de carburant allouée à la phase de vol suivante. Le pilote peut également paramétrer la phase de vol suivante de la même manière, ce qui modifiera sa phase de vol en cours.

Avantageusement encore, les courbes d'iso-consommation 60 permettent au pilote de situer facilement différentes configurations d'altitude ALT et de grandeur de propulsion PROP qui permettront un gain ou une perte de temps par rapport à la durée initialement prévue. Les valeurs de ces gain(s), et respectivement de ces perte(s), sont en outre signalées via les indications temporelles, telles que « T+5 », voire « T+10 », et respectivement « T-5 », voire « T-10 ».

Avantageusement encore, la ou les courbes d'iso-énergie 65 permettent de passer facilement du domaine de surconsommation, c'est-à-dire du deuxième sous-domaine 29, au domaine de consommation réduite, c'est-à-dire au premier sous-domaine 28, simplement en montant et en perdant de la vitesse, en suivant ces courbes d'iso-énergie 65. Autrement dit, cela permet aux pilotes de savoir comment rejoindre le premier sous-domaine 28 favorable de consommation réduite en minimisant la consommation pendant la période de transition vers ce premier sous-domaine 28, en l'occurrence en réduisant l'énergie cinétique au profit d'une augmentation de l'énergie potentielle, à énergie totale constante.

Avantageusement encore, des zones à éviter, à savoir les zones interdites 60, avec par exemple des limites indiquées en altitudes (zone d'interdiction de vol) et des limites de vitesse minimales, sont également déterminées.

On conçoit donc que le procédé de détermination et le dispositif électronique de détermination 20 selon l'invention permettent, pour le pilote, de prévoir plus facilement la consommation de carburant de l'aéronef 12, notamment au cours de chaque phase de vol où l'aéronef 12 ne suit pas une trajectoire prédéfinie, et d'améliorer alors la sécurité du vol.

## Revendications

1. Procédé de détermination d'au moins un domaine de consommation de carburant (14) pour un aéronef (12), le procédé étant mis en œuvre par un dispositif électronique de détermination (20) et comprenant l'étape suivante :
- acquisition (100) d'un domaine de vol (24) de l'aéronef (12), le domaine de vol (24) étant fonction de l'altitude (ALT) et d'une grandeur de propulsion (PROP) de l'aéronef (12),
**caractérisé en ce qu'**il comprend en outre, pour au moins une phase de vol respective, les étapes suivantes :
- calcul (110) d'une courbe limite de consommation de carburant (26) en fonction de l'altitude (ALT) et de la grandeur de propulsion (PROP), la courbe limite de consommation (26) correspondant à une consommation moyenne prévue pour ladite phase de vol,
- détermination (120), à partir du domaine de vol (24) et de la courbe limite de consommation (26), d'un domaine de consommation de carburant (14) en fonction de l'altitude (ALT) et de la grandeur de propulsion (PROP), le domaine de consommation de carburant (14) comportant un premier sous-domaine (28) de consommations inférieures à la consommation prévue pour ladite phase de vol et un deuxième sous-domaine (29) de consommations supérieures à ladite consommation prévue, les premier (28) et deuxième (29) sous-domaines de consommation étant séparés par la courbe limite de consommation (26), un symbole (54) représentatif d'une consommation instantanée de l'aéronef (12) étant en outre déterminé, pour être affiché sur le domaine de consommation de carburant (14), et
- affichage (130), sur un écran d'affichage (18), du domaine de consommation de carburant (14) déterminé pour ladite phase de vol.

2. Procédé selon la revendication 1, dans lequel, lors de l'étape de détermination (120), au moins une courbe d'iso-consommation (60) est en outre déterminée, pour être affichée sur le domaine de consommation de carburant (14), chaque courbe d'iso-consommation (60) correspondant à une consommation moyenne pour une durée de phase de vol modifiée par rapport à celle prise en compte pour le calcul de la courbe limite de consommation (26) ;
la variation temporelle entre la durée modifiée pour une courbe d'iso-consommation respective et la durée prise en compte pour le calcul de la courbe limite de consommation (26) étant de préférence un multiple d'intervalle(s) de cinq minutes.

3. Procédé selon la revendication 1 ou 2, dans lequel, lors de l'étape de détermination (120), lorsque la grandeur de propulsion (PROP) est la vitesse (V) de l'aéronef (12), au moins une courbe d'iso-énergie (65) est en outre déterminée, pour être affichée sur le domaine de consommation de carburant (14), chaque courbe d'iso-énergie (65) représentant l'évolution de la vitesse (V) en fonction de l'altitude (ALT) à énergie totale constante.

4. Procédé selon l'une quelconque des revendication précédentes, dans lequel l'étape de détermination (120) comporte en outre la détection de la présence d'une zone interdite de vol (60) pour une plage de valeurs d'altitude (ALT) et/ou de grandeur de propulsion (PROP), pour être affichée sur le domaine de consommation de carburant (14).

5. Procédé selon l'une quelconque des revendications précédentes, dans lequel, lors de l'étape de calcul (110), la courbe limite de consommation (26) est calculée via l'intersection d'une surface modélisée de consommation (50) pour l'aéronef (12) et d'une surface de consommation de référence (52) pour ladite phase de vol ;
la surface modélisée de consommation (50) étant de préférence prédéfinie et associant une consommation estimée à chaque grandeur de propulsion (PROP) et altitude (ALT) du domaine de vol (24) de l'aéronef (12) ;
la surface de consommation de référence (52) étant de préférence fonction d'une quantité de carburant prévue pour ladite phase de vol et d'une durée prévue de ladite phase de vol ;
la surface de consommation de référence (52) étant de préférence encore un plan horizontal correspondant à une consommation constante, égale à la quantité de carburant prévue divisée par la durée prévue.

6. Procédé selon l'une quelconque des revendications précédentes, dans lequel la grandeur de propulsion (PROP) est choisie parmi le groupe consistant en : une vitesse de l'aéronef (12), telle que la vitesse air, et une puissance moteur de l'aéronef (12).

7. Programme d'ordinateur comportant des instructions logicielles qui, lorsqu'elles sont exécutées par un ordinateur, mettent en œuvre un procédé selon l'une quelconque des revendications précédentes.

8. Dispositif électronique (20) de détermination d'au moins un domaine de consommation de carburant (14) pour un aéronef (12), chaque domaine de consommation de carburant (14) étant destiné à être affiché sur un écran d'affichage (18), le dispositif (20) comprenant :
- un module d'acquisition (30) configuré pour acquérir un domaine de vol (24) de l'aéronef (12), le domaine de vol (24) étant fonction de l'altitude (ALT) et d'une grandeur de propulsion (PROP) de l'aéronef (12),
**caractérisé en ce qu'**il comprend en outre :
- un module de calcul (32) configuré, pour au moins une phase de vol respective, pour calculer une courbe limite de consommation de carburant (26) en fonction de l'altitude (ALT) et de la grandeur de propulsion (PROP), la courbe limite de consommation (26) correspondant à une consommation moyenne prévue pour ladite phase de vol, et
- un module de détermination (34) configuré, pour ladite au moins une phase de vol respective, pour déterminer un domaine de consommation de carburant (14) en fonction de l'altitude (ALT) et de la grandeur de propulsion (PROP), à partir du domaine de vol (24) et de la courbe limite de consommation (26), le domaine de consommation de carburant (14) comportant un premier sous-domaine (28) de consommations inférieures à la consommation prévue pour ladite phase de vol et un deuxième sous-domaine (29) de consommations supérieures à ladite consommation prévue, les premier (28) et deuxième (29) sous-domaines de consommation étant séparés par la courbe limite de consommation (26), un symbole (54) représentatif d'une consommation instantanée de l'aéronef (12) étant en outre déterminé, pour être affiché sur le domaine de consommation de carburant (14).

9. Système électronique d'affichage (10) pour un aéronef (12), le système (10) comprenant :
- un écran d'affichage (18),
- un dispositif électronique (20) de détermination d'au moins un domaine de consommation de carburant (14) pour l'aéronef (12), et
- un module (22) d'affichage, sur l'écran d'affichage (18), du domaine de consommation de carburant (14) pour au moins une phase de vol respective,
**caractérisé en ce que** le dispositif (20) est selon la revendication précédente.

## Patentansprüche

1. Verfahren zum Ermitteln von zumindest einem Treibstoffverbrauchsbereich (14) für ein Luftfahrzeug (12), wobei das Verfahren mittels einer elektronischen Ermittlungsvorrichtung (20) durchgeführt wird und den folgenden Schritt aufweist:
- Erlangen (100) eines Flugbereichs (24) des Luftfahrzeugs (12), wobei der Flugbereich (24) abhängig von der Höhe (ALT) und von einer Vortriebsgröße (PROP) des Luftfahrzeugs (12) ist,
**dadurch gekennzeichnet, dass** es ferner, für zumindest eine jeweilige Flugphase, die folgenden Schritte aufweist:
- Berechnen (110) einer Treibstoffverbrauchsgrenzlinie (26) in Abhängigkeit von der Höhe (ALT) und von der Vortriebsgröße (PROP), wobei die Verbrauchsgrenzlinie (26) zu einem mittleren Verbrauch korrespondiert, welcher für die besagte Flugphase vorhergesehen wird,
- Ermitteln (120), ausgehend vom Flugbereich (24) und von der Verbrauchsgrenzlinie (26), eines Treibstoffverbrauchsbereichs (14) in Abhängigkeit von der Höhe (ALT) und von der Vortriebsgröße (PROP), wobei der Treibstoffverbrauchsbereich (14) aufweist einen ersten Unterbereich (28) von Verbräuchen, die kleiner sind als der für die besagte Flugphase vorhergesehene Verbrauch, und einen zweiten Unterbereich (29) von Verbräuchen, die größer sind als der besagte vorhergesehene Verbrauch, wobei der erste (28) und der zweite (29) Verbrauchsunterbereich mittels der Verbrauchsgrenzlinie (26) getrennt sind, wobei ein Symbol (54), welches repräsentativ für einen momentanen Verbrauch des Luftfahrzeugs (12) ist, ferner ermittelt wird, um auf dem Treibstoffverbrauchsbereich (14) angezeigt zu werden, und
- Anzeigen (130), auf einem Anzeigebildschirm (18), des Treibstoffverbrauchsbereichs (14), welcher für die besagte Flugphase ermittelt wird.

2. Verfahren gemäß Anspruch 1, wobei, während des Schritts des Ermittelns (120), zumindest eine Gleicher-Verbrauch-Linie (60) ferner ermittelt wird, um auf dem Treibstoffverbrauchsbereich (14) angezeigt zu werden, wobei jede Gleicher-Verbrauch-Linie (60) zu einem mittleren Verbrauch für eine Flugphasendauer korrespondiert, welche bezüglich derjenigen, die für das Berechnen der Verbrauchsgrenzlinie (26) berücksichtigt wird, modifiziert ist,
wobei die zeitliche Abweichung zwischen der modifizierten Dauer für eine jeweilige Gleicher-Verbrauch-Linie und der Dauer, welche für das Berechnen der Verbrauchsgrenzlinie (26) berücksichtigt wird, vorzugsweise ein Vielfaches von einem Intervall/Intervallen von fünf Minuten ist.

3. Verfahren gemäß Anspruch 1 oder 2, wobei, während des Schritts des Ermittelns (120), wenn die Vortriebsgröße (PROP) die Geschwindigkeit (V) des Luftfahrzeugs (12) ist, zumindest eine Gleiche-Energie-Linie (65) ferner ermittelt wird, um auf dem Treibstoffverbrauchsbereich (14) angezeigt zu werden, wobei jede Gleiche-Energie-Linie (65) die Entwicklung der Geschwindigkeit (V) in Abhängigkeit von der Höhe (ALT) bei konstanter Gesamtenergie darstellt.

4. Verfahren gemäß irgendeinem der vorherigen Ansprüche, wobei der Schritt des Ermittelns (120) ferner aufweist das Detektieren des Vorhandenseins einer verbotenen Flugzone (60) für einen Bereich von Höhe (ALT)- und/oder Vortriebsgröße (PROP)-Werten, um auf dem Treibstoffverbrauchsbereich (14) angezeigt zu werden.

5. Verfahren gemäß irgendeinem der vorherigen Ansprüche, wobei, während des Schritts des Berechnens (110), die Verbrauchsgrenzlinie (26) berechnet wird via Schneiden einer modellierten Verbrauchsfläche (50) für das Luftfahrzeug (12) und einer Referenz-Verbrauchsfläche (52) für die besagte Flugphase,
wobei die modellierte Verbrauchsfläche (50) vorzugsweise vordefiniert ist und einen abgeschätzten Verbrauch mit jeder Vortriebsgröße (PROP) und Höhe (ALT) des Flugbereichs (24) des Luftfahrzeugs (12) assoziiert,
wobei die Referenz-Verbrauchsfläche (52) vorzugsweise abhängig ist von einer Treibstoffmenge, welche für die besagte Flugphase vorhergesehen wird, und von einer Dauer, welche für die besagte Flugphase vorhergesehen wird,
wobei die Referenz-Verbrauchsfläche (52) vorzugsweise außerdem eine horizontale Ebene ist, welche zu einem konstanten Verbrauch korrespondiert, und gleich zur Menge an vorhergesehenem Treibstoff geteilt durch die vorhergesehene Dauer ist.

6. Verfahren gemäß irgendeinem der vorherigen Ansprüche, wobei die Vortriebsgröße (PROP) ausgewählt ist aus der Gruppe, welche besteht aus: einer Geschwindigkeit des Luftfahrzeugs (12), wie zum Beispiel der Luftgeschwindigkeit, und einer Motorleistung des Luftfahrzeugs (12).

7. Computerprogramm, welches Logikinformationen aufweist, welche, wenn sie mittels eines Computers ausgeführt werden, ein Verfahren gemäß irgendeinem der vorherigen Ansprüche durchführen.

8. Elektronische Vorrichtung (20) zum Ermitteln von zumindest einem Treibstoffverbrauchsbereich (14) für ein Luftfahrzeug (20), wobei jeder Treibstoffverbrauchsbereich (14) dazu bestimmt ist, auf einem Anzeigebildschirm (18) angezeigt zu werden, wobei die Vorrichtung (20) aufweist:
- ein Modul zum Erlangen (30), welches eingerichtet ist, um einen Flugbereich (24) des Luftfahrzeugs (12) zu erlangen, wobei der Flugbereich (24) abhängig ist von der Höhe (ALT) und von einer Vortriebsgröße (PROP) des Luftfahrzeugs (12),
**dadurch gekennzeichnet, dass** sie ferner aufweist:
- ein Modul zum Berechnen (32), welches eingerichtet ist, um, für zumindest eine jeweilige Flugphase, eine Treibstoffverbrauchsgrenzlinie (26) in Abhängigkeit von der Höhe (ALT) und von der Vortriebsgröße (PROP) zu berechnen, wobei die Verbrauchsgrenzlinie (26) zu einem mittleren Verbrauch korrespondiert, welcher für die besagte Flugphase vorhergesehen wird, und
- ein Modul zum Ermitteln (34), welches eingerichtet ist, um, für die besagte zumindest eine jeweilige Flugphase, einen Treibstoffverbrauchsbereich (14) in Abhängigkeit von der Höhe (ALT) und von der Vortriebsgröße (PROP) zu ermitteln, ausgehend vom Flugbereich (24) und von der Verbrauchsgrenzlinie (26), wobei der Treibstoffverbrauchsbereich (14) aufweist einen ersten Unterbereich (28) von Verbräuchen, die kleiner sind als der für die besagte Flugphase vorhergesehene Verbrauch, und einen zweiten Unterbereich (29) von Verbräuchen, die größer sind als der besagte vorhergesehene Verbrauch, wobei der erste (28) und der zweite (29) Verbrauchsunterbereich mittels der Verbrauchsgrenzlinie (26) getrennt sind, wobei ein Symbol (54), welches repräsentativ für einen momentanen Verbrauch des Luftfahrzeugs (12) ist, ferner ermittelt wird, um auf dem Treibstoffverbrauchsbereich (14) angezeigt zu werden.

9. Elektronisches Anzeigesystem (10) für ein Luftfahrzeug (12), wobei das System (10) aufweist:
- einen Anzeigebildschirm (18),
- eine elektronische Vorrichtung (20) zum Ermitteln von zumindest einem Treibstoffverbrauchsbereich (14) für das Luftfahrzeug (12) und
- ein Modul (22) zum Anzeigen, auf dem Anzeigebildschirm (18), des Treibstoffverbrauchsbereichs (14) für zumindest eine jeweilige Flugphase,
**dadurch gekennzeichnet, dass** die Vorrichtung (20) gemäß dem vorherigen Anspruch ist.

## Claims

1. A method for determining at least one fuel consumption domain (14) for an aircraft (12), the method being implemented by an electronic determining device (20) and comprising the following step:
- acquiring (100) a flight envelope (24) of the aircraft (12), the flight envelope (24) being a function of the altitude (ALT) and a propulsion property (PROP) of the aircraft (12),
**characterized in that** it further comprises, for at least one respective flight phase, the following steps:
- calculating (110) a fuel consumption limiting curve (26) as a function of the altitude (ALT) and the propulsion property (PROP), the consumption limiting curve (26) corresponding to an average consumption provided for said flight phase,
- determining (120), from the flight envelope (24) and the consumption limiting curve (26), a fuel consumption domain (14) as a function of the altitude (ALT) and the propulsion property (PROP), the fuel consumption domain (14) including a first consumption subdomain (28) below the anticipated consumption for said flight phase and a second consumption subdomain (29) above said anticipated consumption, the first (28) and second (29) consumption subdomains being separated by the consumption limit curve (26), a symbol (54) representative of an instantaneous consumption of the aircraft (12) being further determined, to be displayed on the fuel consumption domain (14), and
- displaying (130), on a display screen (18), the fuel consumption domain (14) determined for said flight phase.

2. The method according to claim 1, wherein, during the determining step (120), at least one iso-consumption curve (60) is further determined, to be displayed on the fuel consumption domain (14), each iso-consumption curve (60) corresponding to an average consumption for a modified flight phase duration relative to that taken into account to calculate the consumption limiting curve (26);
the time variation between the modified duration for a respective iso-consumption curve and the duration taken into account to calculate the consumption limiting curve (26) preferably being a multiple of five minute interval(s).

3. The method according to claim 1 or 2, wherein, during the determining step (120), when the propulsion property (PROP) is the speed (V) of the aircraft (12), at least one iso-energy curve (65) is further determined, to be displayed on the fuel consumption domain (14), each iso-energy curve (65) representing the evolution of the speed (V) as a function of the altitude (ALT) at constant total energy.

4. The method according to any one of the preceding claims, wherein the determining step (120) further includes detecting the presence of a prohibited flight zone (60) for a range of altitude (ALT) and/or propulsion property (PROP) values, to be displayed on the fuel consumption domain (14).

5. The method according to any one of the preceding claims, wherein, during the calculating step (110), the consumption limiting curve (26) is calculated via the intersection of a modeled consumption surface (50) for the aircraft (12) and a reference consumption surface (52) for said flight phase;
the modeled consumption surface (50) preferably being predefined and associating an estimated consumption with each propulsion property (PROP) and altitude (ALT) of the flight envelope (24) of the aircraft (12);
the reference consumption surface (52) preferably being a function of a quantity of fuel provided for said flight phase and an anticipated duration of said flight phase;
the reference consumption surface (52) further preferably being a horizontal plane corresponding to a constant consumption, equal to the anticipated quantity of fuel divided by the anticipated duration.

6. The method according to any one of the preceding claims, wherein the propulsion property (PROP) is chosen from among the group consisting of: a speed of the aircraft (12), such as the airspeed, and an engine power of the aircraft (12).

7. A computer program comprising software instructions which, when executed by a computer, carry out a method according to any one of the preceding claims.

8. An electronic device (20) for determining at least one fuel consumption domain (14) for an aircraft (12), the device (20) comprising:
- an acquisition module (30) configured to acquire a flight envelope (24) of the aircraft (12), the flight envelope (24) being a function of the altitude (ALT) and a propulsion property (PROP) of the aircraft (12),
**characterized in that** it further comprises:
- a calculating module (32) configured, for at least one respective flight phase, to calculate a fuel consumption limiting curve (26) as a function of the altitude (ALT) and the propulsion property (PROP), the consumption limiting curve (26) corresponding to an average consumption provided for said flight phase, and
- a determining module (34) configured, for said at least one respective flight phase, to determine a fuel consumption domain (14) as a function of the altitude (ALT) and the propulsion property (PROP), from the flight envelope (24) and the consumption limiting curve (26), the fuel consumption domain (14) including a first consumption subdomain (28) below the anticipated consumption for said flight phase and a second consumption subdomain (29) above said anticipated consumption, the first (28) and second (29) consumption subdomains being separated by the consumption limit curve (26), a symbol (54) representative of an instantaneous consumption of the aircraft (12) being further determined, to be displayed on the fuel consumption domain (14).

9. An electronic display system (10) for an aircraft (12), the system (10) comprising:
- a display screen (18),
- an electronic device (20) for determining at least one fuel consumption domain (14) for the aircraft (12), and
- at least one module (22) for displaying, on the display screen (18), the fuel consumption domain (14) for at least one respective flight phase,
**characterized in that** the device (20) is according to the preceding claim.
